# EUROPÄISCHE PATENTSCHRIFT

(11) **EP 2 710 940 B1**
(45) Veröffentlichungstag und Bekanntmachung des Hinweises auf die Patenterteilung: **08.06.2016**
(21) Anmeldenummer: 13004599.0
(22) Anmeldetag: 20.09.2013
(51) Int. Cl.: A47J 31/46, A47J 43/12, A47J 31/44, F16K 11/085

(54) **Mehrwegeventil**
Multi-directional valve
Soupape à plusieurs voies

(30) Priorität: 21.09.2012 DE 202012009075 U
(43) Veröffentlichungstag der Anmeldung: 26.03.2014
(73) Patentinhaber: Eugster/Frismag AG, 8580 Amriswil (CH)
(72) Erfinder: Fischer, Daniel, 8590 Romashorn (CH)
(74) Vertreter: Schubert, Siegmar

(56) Entgegenhaltungen:
- EP-A1- 1 086 641
- WO-A1-2008/151910
- DE-U1-202008 016 400

## Beschreibung

Die Erfindung betrifft ein Mehrwegeventil in einer Vorrichtung zur Milchschaumbereitung nach dem Oberbegriff des Anspruchs 1.

Ein solches kompaktes Mehrwegeventil kann in einer Getränkezubereitungseinheit, insbesondere einer Espressomaschine, wählbar zu einer Heißmilchbereitung oder einer Milchschaumerzeugung, und alternativ zur Reinigung milchführender Leitungen bzw. Strömungswege eingesetzt werden (DE 20 2008 016 400 U1). Die Vorrichtung zur Milchschaumbereitung ist in diesem Fall Bestandteil der Getränkezubereitungseinheit, insbesondere der Espressomaschine. Mit dem Mehrwegeventil kann in wenigstens einer ersten gesteuerten Ventilstellung dessen Kaltmilcheingang mit einem Ventilausgang verbunden werden, von dem eine Milchleitung zu einem Schäumkopf führt, oder in einer weiteren gesteuerten Ventilstellung ein Spülen der sonst milchbelasteten Milchleitung sowie von Strömungspfaden erfolgen oder in einer noch weiteren gesteuerten Ventilstellung deren Belüftung. Zur Herstellung von Milchschaum ist ein getrenntes Luft-Magnetventil vorgesehen, welches mit der Milchleitung zwischen dem Ventilausgang des Mehrwegeventils mit einem Schäumkopf in Strömungsverbindung steht, um in dem Schäumkopf wahlweise Einstellung eines gewünschten Durchschaltwegs in einem Gehäuse drehbar ist, wobei das Gehäuse einen Außenzylinder um den zylindrischen Hahn bzw. Innenzylinder als Ventilkörper darstellt. Die Strömungspfade verlaufen insbesondere in einer Querschnittsebene in dem Innenzylinder radial. Die Öffnungen des Kaltmilcheingangs, eines Kaltwassereingangs als Reinigungsflüssigkeitseingang und eines Lufteingangs zum Belüften der milchführenden Leitungen sind in Umfangsrichtung des Außenzylinders bzw. Gehäuses angeordnet.

Der vorliegenden Erfindung liegt die Aufgabe zugrunde, die Reinigung des Mehrwegeventils, insbesondere dessen Ventilkörpers mit mindestens einem milchführenden Ventilpfad in unkomplizierter Weise zu verbessern.

Diese Aufgabe wird durch das Mehrwegeventil mit den Merkmalen des Anspruchs 1 gelöst, dessen Ventilpfade insbesondere im Wesentlichen an einer äußeren Mantelfläche des Ventilkörpers ausgeformt sind.

Dazu ist außen um den Ventilkörper, der als Steckeinsatz ausgebildet ist, d.h. um eine Mantelfläche des Ventilkörpers in axialem Abstand zueinander wenigstens zwei Ringdichtungen angeordnet und in gleichem axialen Abstand sind innen in einer Innenwand des den Ventilkörper aufnehmenden Gehäuses zwei Ringnuten ausgeformt, in die die Ringdichtungen im zusammengesteckten Zustand des Mehrwegeventils so eingreifen, dass der Ventilkörper im Bedarfsfall aus dem Gehäuse manuell, insbesondere ohne Werkzeug, unter elastischer Verformung der Ringdichtungen einfach herausgezogen werden kann und nach Reinigung wieder nach außen dicht eingesetzt werden kann. Hierbei sind die Ringdichtungen an axialen Enden des Ventilkörpers angeordnet, um Ventilpfade an dem Außenumfang bzw. Mantel des Ventilkörpers nicht zu unterbrechen. Bei geeigneter Materialauswahl für die Ringdichtungen und Dimensionierung der Ringnuten kann der Ventilkörper wiederholt aus dem Gehäuse entnommen werden und funktionsfähig wieder eingesetzt werden. Dabei erfolgt eine weitgehende Sicherung gegen unwillkürliches axiales Lösen des Ventilkörpers aus dem Gehäuse.

Generell werden die Dichtigkeit der Ventilpfade in der Mantelfläche des Ventilkörpers und dessen drehbare Lagerung durch dessen Anlage innen in dem Gehäuse hergestellt.

Die mindestens eine Ringdichtung auf dem Ventilkörper dient in Verbindung mit der inneren Ringnut in dem Gehäuse nicht nur jeweils als eine die Drehung des Ventilkörpers in dem Gehäuse erlaubende Abdichtung zu dem Äußeren des Gehäuses, sondern auch als Halterung gegen eine unwillkürliche axiale Verschiebung des Ventilkörpers in dem Gehäuse, insbesondere gegen ein unbeabsichtigtes Lösen des Ventilkörpers aus dem Gehäuse.

Zur möglichst vollständigen Abdichtung des Mehrwegeventils nach außen ist gemäß Anspruch 2 eine der beiden Ringnuten in dem Gehäuse innen an dessen offener Stirnseite ausgeformt. Passend dazu ist die Ringdichtung an dem entsprechenden äußeren axialen Ende des Ventilkörpers angeordnet.

Zur einfachen und sicheren Entnahme des Ventilkörpers aus dem Gehäuse ist nach Anspruch 5 an einem axialen Ende des Ventilkörpers, das im zusammengesteckten Zustand des Mehrwegeventils an der offenen Stirnseite des Gehäuses angeordnet ist, ein manuelles Einstellelement angeordnet, mit dem der Ventilkörper nicht nur drehbar für verschiedene Ventilstellungen einstellbar ist, sondern im Bedarfsfall auch aus dem Gehäuse unter Überwindung des Widerstands der Ringdichtung bzw. Ringdichtungen, die in der Ringnut sitzt bzw. sitzen, herausziehbar ist. In einfacher, wirkungsvoller Weise kann das Einstelletement als Einstellscheibe ausgebildet sein.

Nach Anspruch 4 können der drehbare Ventilkörper außen und das Gehäuse innen jeweils zylindrisch geformt sein, so dass der Ventilkörper innen dicht an dem Gehäuse anliegt und gleichwohl in diesem gleiten bzw. gedreht werden kann. Diese Ausbildung ist besonders fertigungsgünstig.

Statt dessen ist es nach Anspruch 5 auch möglich, dass der Ventilkörper außen konisch ausgebildet ist und ähnlich das Gehäuse innen konisch geformt ist, so dass diese beiden Teile im Wesentlichen an ihren gesamten Außenumfang bzw. Innenumfang dicht zur Anlage gelangen können.

Zur Milchschaumbereitung besonders zweckmäßig ist das Mehrwegeventil nach Anspruch 6 kompakt mit einem Ventilpfad bzw. Kanal insbesondere in der Mantelfläche des Ventilkörpers ausgebildet, der in einer Ventilstellung den Milcheingang und den Lufteingang mit dem Ventilausgang strömungsmäßig verbindet. In diesem Fall kann das Mehrwegeventil die Luftzumischung zu der durch das Mehrwegeventil strömenden Milch zur Milchschaumerzeugung bewirken, so dass ein gesondertes Magnetventil in einer Luftleitung, die in eine milchführende Leitung extern des Mehrwegeventils mündet, entbehrlich ist. Das Mehrwegeventil ist damit zum Einsatz in einer Vorrichtung zur Milchschaumbereitung besonders gut geeignet.

Konstruktiv abgewandelt oder erweitert werden kann das Mehrwegeventil zur Einstellung von Funktionen eines Getränkezubereitungsgeräts wie einer Espressomaschine, insbesondere, wenn dieses bzw. diese eine Vorrichtung zur Milchschaumbereitung umfasst.

Mit den Merkmalen des Mehrwegeventils nach Anspruch 7 werden einfach zu fertigende achsparallele Ventilpfade ermöglicht.

Ein Ausführungsbeispiel des Mehrwegeventils wird im Folgenden anhand einer Zeichnung mit fünf Figuren erläutert, woraus sich Merkmale der Erfindung ergeben können. Es zeigen:
- Fig. 1: einen Ventilkörper des Mehrwegeventils in einer Seitenansicht,
- Fig. 2: ein zugehöriges Gehäuse des Mehrwegeventils in einem Längsschnitt,
- Fig. 3: das Mehrwegeventil in dem Zustand, in dem der Ventilkörper gemäß Fig. 1 in das Gehäuse gemäß Fig. 2 eingesteckt ist,
- Fig. 4: das Mehrwegeventil gemäß Fig. 3 in einer Ansicht auf die in Fig. 3 linke Seite des Mehrwegeventils und
- Fig. 5a, 5b, 5c: jeweils eine sinnbildliche Darstellung des Mehrwegeventils in einer Stellung, in der durch dieses nur Milch geleitet wird, bzw. in einer weiteren Stellung, in der durch dieses Milch und Luft zur Schaumerzeugung zusammengeführt wird, und in einer noch weiteren Stellung, in der durch das Mehrwegeventil Spülwasser zu mindestens einer milchführenden Leitung strömt.

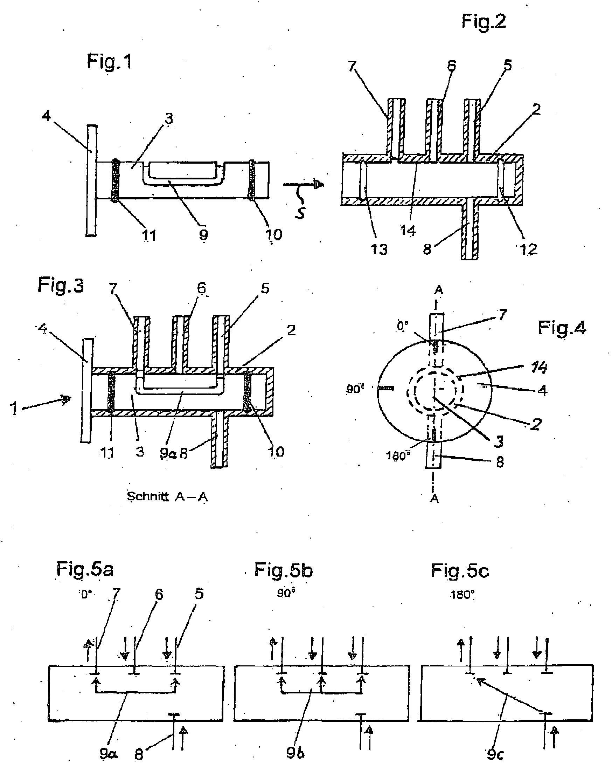

Das allgemein mit 1 bezeichnete Mehrwegeventil umfasst ein im Wesentlichen zylinderförmiges Gehäuse 2 mit einer zylindrischen Innenwand 14, wie in den Fig. 2 und 4 gezeigt, sowie einen als Hahn ausgebildeten Ventilkörper 3, der außen zu der zylindrischen Innenwand 14 des Gehäuses 2 passend ebenfalls im Wesentlichen zylindrisch ist, siehe Fig. 1, 3 und 4, so dass der Ventilkörper 3 in Richtung des Pfeils S in das Gehäuse 2 eingesteckt werden kann, in dem er an der Innenwand 14 dicht, aber gleitbeweglich zur Anlage gelangt.

Das Gehäuse 2 des Mehrwegeventils weist einen Milcheingang 5, einen Lufteingang 6, einen Ventilausgang 7 und einen Reinigungsflüssigkeitseingang 8 auf, die je nach Ventileinstellung in jeweils einen der aus dem Mantel bzw. der äußeren Wand des Ventilkörpers 3 ausgeformten als Ventilpfade 9a, 9b, 9c dienende Kanäle münden können. In dem Ausführungsbeispiel sind der Milcheingang 5, der Lufteingang 6 und der Ventilausgang (7) in einer Reihe entlang einer nicht eingezeichneten Längsachse des Mehrwegeventils, die gleich der Drehachse ist, angeordnet, was einfache achsparallele Ventilpfade 9a, 9b ermöglicht.

An seinem stirnseltigen Ende ist der Ventilkörper 3 mit einer Einstellscheibe 4 versehen, mit der der Ventilkörper 3 in drei Ventilstellungen gedreht werden kann, die weiter unten anhand der Fig. 5a, 5b und 5c erläutert werden. In jeder der Ventilstellungen verbindet ein Ventilpfad, z.B. 9a, wenigstens einen der Ventileingänge 5, 6 und 8 mit einem Ventilausgang 7.

Das Gehäuse 2 des Ventils ist zur Aufnahme des Ventilkörpers 3 an einer Stirnseite offen, wie in Fig. 2 dargestellt. Der in die Öffnung des Gehäuses 2 einsteckbare zylindrische Ventilkörper 3 ist in dem vorliegenden Ausführungsbeispiel mit zwei Ringdichtungen an seinen Enden ausgestattet, so dass sich die Ventilpfade, beispielsweise 9a, wie in den Fig. 1 und 3 dargestellt, zwischen den Ringdichtungen 10, 11 erstrecken können. Die Ringdichtungen verhindern ein Austreten der durch das Mehrwegeventil fließenden Flüssigkeiten nach außen und positionieren den Ventilkörper 3 mittels der Ringnuten 12, 13, die in der Innenwand 14 des Gehäuses 2 in gleichem axialen Abstand wie die Ringdichtungen 10, 11 in dem Ventilkörper 3 ausgeformt sind.

Unter Verformung der Ringdichtungen 10, 11 kann der Ventilkörper 3 entgegen der Richtung des Pfeils S aus dem Gehäuse 2 mittels der Einstellscheibe 4 herausgezogen werden.

Die einstellbaren Ventilstellungen ergeben sich aus den Figuren 4, 5a, 5b und 5c. In Fig. 4 sind die Ventilstellungen auf einer Stirnseite der Einstallscheibe 4 markiert, die aus einer Null-Grad-Stellung in eine Neunzig-Grad-Stellung oder in eine Hundertachtzig-Grad-Stellung zusammen mit dem Ventilkörper 3 gedreht werden kann.

In der Null-Grad-Stellung der Einstellscheibe 4 und damit des Mehrwegeventils 1 kann Milch, die in den Milcheingang 5 eingeleitet wird, über den Ventilpfad 9a, siehe Fig. 3 und 5a, zu dem Ventilausgang 7 strömen.

In der Neunzig-Grad-Stellung des Mehrwegeventils 1 wird der Milcheingang 5 ebenfalls mit dem Ventilausgang 7 verbunden, wobei der verbindende Ventilpfad 9b, siehe Fig. 5b, außerdem mit dem Lufteingang 6 verbunden ist, so dass die durch den Ventilpfad 9b strömende Milch mit Luft durchsetzt wird.

In der Hundertachtzig-Grad-Stellung des Mehrwegeventils gemäß Fig. 5c kann Reinigungsflüssigkeit aus dem Reinigungsflüssigkeitseingang 8 über den Ventilpfad 9c in den Milcheingang 5 im Gegenstrom eingeleitet werden und von diesem in eine angeschlossene Milchleitung.

Zur Reinigung des Mehrwegeventils 1 selbst wird der Ventilkörper 3 mittels der Einsteilscheibe 4 manuell aus dem Gehäuse 2 gezogen, so dass dieser über seinen gesamten Außenumfang mit den Ventilpfaden 9a, 9b, 9c frelliegt und vollständig gereinigt werden kann. Außerdem ist das Innere des Gehäuses zur Reinigung von außen zugänglich.

Das Mehrwegeventil ist somit zu Reinigungszwecken sehr gut geeignet. Es zeichnet sich außerdem durch eine einfache Bauweise aus.

### Bezugszahlenliste

- 1: Mehrwegeventil
- 2: Gehäuse
- 3: Ventilkörper
- 4: Einstellscheibe
- 5: Milcheingang
- 6: Lufteingang
- 7: Ventilausgang
- 8: Reinigungsflüssigkeitseingang
- 9a: Ventilpfad (Kanal)
- 9b: Ventilpfade (Kanal)
- 9c: Ventilpfad (Kanal)
- 10: Ringdichtung
- 11: Ringdichtung
- 12: Ringnut
- 13: Ringnut
- 14: Innenwand des Gehäuses
- S: Pfeil

## Patentansprüche

1. Mehrwegeventil in einer Vorrichtung zur Milchschaumbereitung, mit einem Gehäuse (2) und einem in diesem drehbaren Ventilkörper (3) mit mehreren Ventilpfaden (9a, 9b, 9c),
wobei in dem Gehäuse Öffnungen mit einem Milcheingang (5), mit einem Lufteingang (6), mit einem Reinigungsflüssigkeitseingang (8) und mit einem Ventilausgang (7) vorgesehen sind,
**dadurch gekennzeichnet,**
**dass** um eine Mantelfläche des Ventilkörpers (3) in axialem Abstand zueinander zwei elastische Ringdichtung (10, 11) angeordnet sind, dass innen an einer Innenwand (14) in dem an einer Stirnseite offenen Gehäuse (2) in gleichem axialen Abstand zueinander zwei Ringnuten (12, 13) ausgeformt sind, in die im zusammengesteckten Zustand des Mehrwegeventils (1) die Ringdichtungen (10, 11) so eingreifen, dass der Ventilkörper (3) aus dem Gehäuse (2) manuell axial herausziehbar ist, und dass die Ringdichtungen (10, 11) an axialen Enden des Ventilkörpers (3) angeordnet sind.

2. Mehrwegeventil nach Anspruch 1,
**dadurch gekennzeichnet,**
**dass** eine der Ringnuten (12, 13) in dem Gehäuse (2) an der offenen Stirnseite des Gehäuses (2) angeordnet ist.

3. Mehrwegeventil nach Anspruch 1 oder 2,
**dadurch gekennzeichnet,**
**dass** an dem axialen Ende des Ventilkörpers (3), das im zusammengesteckten Zustands des Mehrwegeventils (1) an der offenen Stirnseite des Gehäuses (2) angeordnet ist, ein manuelles Einstellelement angeordnet ist, mit dem der Ventilkörper (3) drehbar einstellbar ist und im Bedarfsfall aus dem Gehäuse (2) herausziehbar ist.

4. Mehrwegeventil nach einem der vorhergehenden Ansprüche,
**dadurch gekennzeichnet,**
**dass** der drehbare Ventilkörper (3) außen und das Gehäuse (2) innen zylindrisch so geformt sind, dass sie dicht aneinanderliegen.

5. Mehrwegeventil nach einem der vorangehenden Ansprüche,
**dadurch gekennzeichnet,**
**dass** der Ventilkörper (3) außen und das Gehäuse (2) innen konisch so ausgebildet sind, dass sie dicht aneinanderliegen.

6. Mehrwegeventil nach einem der vorangehenden Ansprüche,
**dadurch gekennzeichnet,**
**dass** in einer Ventilstellung der Milcheingang (5) und der Lufteingang (6) mit dem Ventilausgang (7) über einen Ventilpfad (9b) verbunden sind.

7. Mehrwegeventil nach einem der vorangehenden Ansprüche,
**dadurch gekennzeichnet,**
**dass** der Milcheingang (5), der Lufteingang (6) und der Ventilausgang (7) in dem Gehäuse (2) in einer Reihe entlang einer Längsachse des Mehrwegeventils, die gleich der Drehachse des Ventilkörpers (3) ist, angeordnet sind.

## Claims

1. Multi-directional valve in a device for the preparation of milk froth, comprising a housing (2) and a valve body (3) which can be rotated therein, the valve body having a plurality of valve paths (9a, 9b, 9c),
wherein openings with a milk inlet (5), an air inlet (6), a cleaning fluid inlet (8) and a valve outlet (7) are provided in the housing,
**characterised**
**in that** two resilient ring seals (10, 11) are arranged about a lateral surface of the valve body (3), at an axial distance from one another,
**in that** two ring grooves (12, 13) are formed inside on an inner wall (14), at the same axial distance from one another in the housing (2) which is open at an end face, the ring seals (10, 11) engaging in the ring grooves in the assembled state of the multi-directional valve (1) such that the valve body (3) can be manually axially pulled out of the housing (2), and
**in that** the ring seals (10, 11) are arranged on axial ends of the valve body (3).

2. Multi-directional valve according to claim 1,
**characterised in that**
one of the ring grooves (12, 13) is arranged in the housing (2) at the open end face of the housing (2).

3. Multi-directional valve according to either claim 1 or claim 2,
**characterised in that,**
at the axial end of the valve body (3) which is arranged at the open end face of the housing (2) in the assembled state of the multi-directional valve (1), a manual setting means is arranged, by means of which the valve body (3) can be rotatably adjusted and can be pulled out of the housing (2) if necessary.

4. Multi-directional valve according to any of the preceding claims,
**characterised in that**
the rotatable valve body (3) outside and the housing (2) inside are shaped cylindrically such that they fit together tightly.

5. Multi-directional valve according to any of the preceding claims,
**characterised in that**
the valve body (3) outside and the housing (2) inside are designed conically such that they fit together tightly.

6. Multi-directional valve according to any of the preceding claims,
**characterised in that,**
in one valve position, the milk inlet (5) and the air inlet (6) are connected to the valve outlet (7) via a valve path (9b).

7. Multi-directional valve according to any of the preceding claims,
**characterised in that**
the milk inlet (5), the air inlet (6) and the valve outlet (7) are provided in the housing (2) in a row along a longitudinal axis of the multi-directional valve which is the same as the rotation axis of the valve body (3).

## Revendications

1. Soupape à plusieurs voies dans un dispositif destiné à la préparation de mousse de lait, avec un boîtier (2) et un corps de soupape (3), pouvant tourner dans celui-ci, avec plusieurs passages dans la soupape (9a, 9b, 9c). où des orifices dans le boîtier avec une entrée de lait (5), avec une entrée d'air (6), avec une entrée de liquide de nettoyage (8) et avec une sortie de soupape (7) sont prévus,
**caractérisée en ce**
**que** deux joints d'étanchéité annulaires (10, 11) élastiques espacés axialement l'un par rapport à l'autre sont disposés autour d'une surface d'enveloppe du corps de soupape (3), que deux rainures annulaires (12, 13) avec le même espacement axial entre elles sont formées à l'intérieur sur une paroi interne (14) dans le boîtier (2) ouvert sur une face frontale, dans lesquelles les joints d'étanchéité annulaires (10, 11) sont en prise, dans l'état assemblé de la soupape à plusieurs voies (1), que le corps de soupape (3) peut être retiré manuellement du boîtier (2) et que les joints d'étanchéité annulaires (10, 11) sont disposés à des extrémités axiales du corps de soupape (3).

2. Soupape à plusieurs voies selon la revendication 1,
**caractérisée en ce**
**que** l'une des rainures annulaires (12, 13) dans le boîtier (2) est agencée sur la face frontale ouverte du boîtier (2).

3. Soupape à plusieurs voies selon les revendications 1 ou 2,
**caractérisée en ce**
**qu'**à l'extrémité axiale du corps de soupape (3), qui est disposée sur la face frontale ouverte du boîtier (2), dans l'état assemblé de la soupape à plusieurs voies (1), un élément de réglage manuel est disposé, le corps de soupape (3) pouvant être réglé en rotation par celui-ci et pouvant être retiré du boîtier (2) en cas de besoin.

4. Soupape à plusieurs voies selon l'une quelconque des revendications précédentes,
**caractérisée en ce**
**que** le corps de soupape (3) pouvant être mis en rotation, à l'extérieur, et le boîtier (2), à l'intérieur, sont conçus cylindriques de telle façon qu'ils sont alignés étroitement l'un contre l'autre.

5. Soupape à plusieurs voies selon l'une quelconque des revendications précédentes,
**caractérisée en ce**
**que** le corps de soupape (3), à l'extérieur, et le boîtier (2), à l'intérieur, sont conçus coniques de sorte qu'ils sont alignés étroitement l'un contre l'autre.

6. Soupape à plusieurs voies selon l'une quelconque des revendications précédentes,
**caractérisée en ce**
**que**, dans un réglage de la soupape, l'entrée de lait (5) et l'entrée d'air (6) sont reliées avec la sortie de soupape (7) par l'intermédiaire d'un passage dans la soupape (9b).

7. Soupape à plusieurs voies selon l'une quelconque des revendications précédentes,
**caractérisée en ce**
**que** l'entrée de lait (5), l'entrée d'air (6) et la sortie de soupape (7) sont disposées dans le boîtier (2) sur une ligne le long d'un axe longitudinal de la soupape à plusieurs voies, qui est simultanément l'axe de rotation du corps de soupape (3).
